# EUROPEAN PATENT SPECIFICATION

(11) **EP 1 687 758 B1**
(45) Date of publication and mention of the grant of the patent: **11.03.2009**
(21) Application number: 04810877.3
(22) Date of filing: 12.11.2004
(51) Int. Cl.: G06K 17/00

(54) **SYSTEM FOR ROUTING AND TRACKING DELIVERABLES**
SYSTEM ZUM ROUTEN UND VERFOLGEN VON DELIVERABLES
SYSTEME D'ACHEMINEMENT ET DE SUIVI DE PRODUITS

(30) Priority: 13.11.2003 US 712983
(43) Date of publication of application: 09.08.2006
(73) Proprietor: BATTELLE MEMORIAL INSTITUTE, Richland, WA 99352 (US)
(72) Inventor: CARRENDER, Curtis, Lee, Morgan Hill, CA 95037 (US); GILBERT, Ronald, W., Gilroy, CA 95020 (US); SCOTT, Jeffrey, W., Pasco, WA 99301 (US); CLARK, David, A., Kennewick, WA 99336 (US)
(74) Representative: Driver, Virginia Rozanne
(86) International application number: PCT/US2004/037859
(87) International publication number: WO 2005/050548

(56) References cited:
- EP-A- 0 855 675
- EP-A- 1 022 065
- DE-A1- 10 012 204
- DE-A1- 19 616 130
- US-A1- 2001 040 513
- US-A1- 2002 088 854
- US-A1- 2003 014 143
- US-B1- 6 557 758

## Description

### BACKGROUND OF THE INVENTION

### Field of the Invention

The present invention pertains to the shipment of articles, and more particularly to a system and method for delivering articles to a delivery point, including the tracking and routing of the articles from a point of origin to the delivery point.

### Description of the Related Art

Efficient and timely shipment of mail, packages, and other deliverables is a goal of government and private postal and shipping organizations. Misrouted deliverables is detrimental to not only the sender and the receiver, but to the carrier responsible for delivery to the correct location. Labor and resources expended in locating and rerouting lost packages is costly, both financially and with respect to the carrier's reputation in the marketplace.

Numerous methods have been proposed to improve package delivery. These include color-coded labels, use of postal codes and zip codes, bar codes, electronic scanners, and radio transmitters and receivers.

One example is found in U.S. Patent No. 6,275,745, which discloses the use of special symbols on the objects inside a package and on the exterior of the package, such as bar codes, to confirm delivery of the object. A battery-powered electronic circuit is attached to the object inside the package and includes a display device and a transmitter to send identifying information about the object to an external receiver. This system requires the use of expensive electronic components that add weight to the material to be shipped. It also requires the use of bar code readers in addition to external transmitters and receivers.

Reference is also made by way of background to US 2003/0014143 which relates to a package delivery system. Each item to be delivered has a label associated with it into which information concerning delivery of the items is written. Query signals can be applied to the labels to retrieve the information and the items can then be sorted by means of the information retrieved and delivered to their destinations.

Another example is found in U.S. Patent No. 5,497,140, which teaches a battery-powered pre-programmed transceiver in the form of a postage stamp or mailing label. The transceiver is formed on a rigid base, which could interfere with processing equipment. In addition, the preprogrammed transceiver requires a linked database in order to use the preprogrammed information.

### BRIEF SUMMARY OF THE INVENTION

In accordance with an aspect of the invention, a transponder is configured for attachment to a deliverable and configured to transmit control signals regarding routing of the deliverable, wherein the at least one transceiver is configured to communicate with a predetermined group of transponders such that deliverables associated with the predetermined group of transponders are sorted and routed to a predetermined delivery path and all other deliverables are routed to a default path.

The disclosed and claimed embodiments of the invention are directed to a system and method for shipping deliverables, including the tracking and routing thereof. In one embodiment, the system includes a flexible, passive, electromagnetic transponder formed on a flexible substrate and attached to a deliverable, such as an article to be delivered. The transponder is coded at the time of attachment with information regarding one or more of the following: the cost of delivery, identification and address of the sender, identification and address of the receiver, destination information, the delivery route, date of sending, date to be delivered, and identification of the deliverable or the article or contents of the article.

In accordance with the invention a system according to claim 1 and a method according to claim 5 are provided.

### BRIEF DESCRIPTION OF THE SEVERAL VIEWS OF THE DRAWING(S)

The foregoing features of the present invention will be more readily appreciated as the same become better understood from the following detailed description when taken in conjunction with the accompanying drawings, wherein:
Figure 1 is a schematic illustration of a known radio frequency identification system;
Figure 2 is a schematic illustrating one embodiment of a system for sorting and routing deliverables;
Figure 3A is an isometric projection of a transponder label formed in accordance with one implementation of the present invention;
Figure 3B is a schematic representation of the transponder label of Figure 3A;
Figure 4 is an illustration of a transponder label and encoding system formed in accordance with the present invention; and
Figure 5 is a block diagram of a system for encoding, sorting and routing, and tracking deliverables in accordance with another embodiment of the invention.

### DETAILED DESCRIPTION OF THE INVENTION

One form of wireless communication that has become economically and technically feasible in this area is radio frequency identification (RFID).

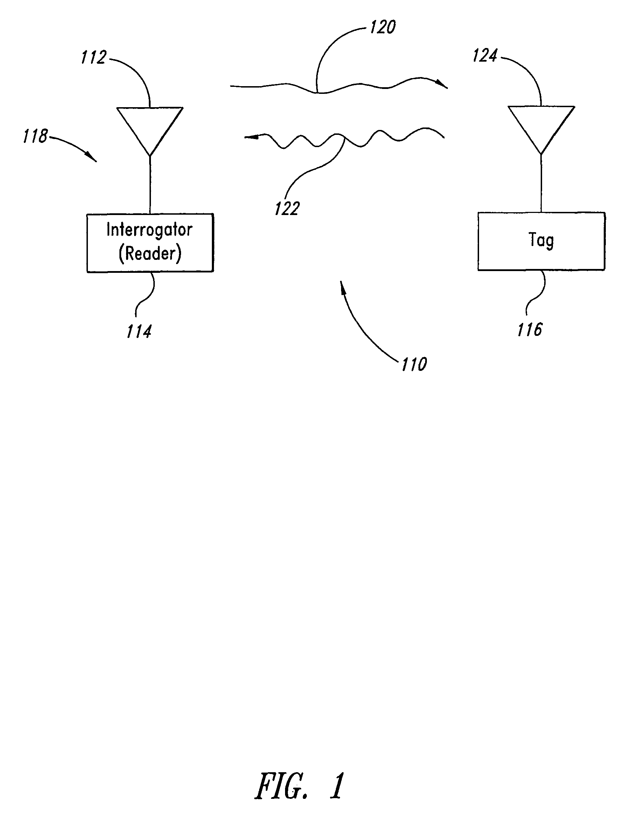

RF identification (RFID) tag systems have been developed to facilitate monitoring of remote objects. As shown in Figure 1, a basic RFID system 110 consists of three components, an antenna 112 or coil, a transceiver with decoder 114, and a transponder (commonly called an RF tag) 116. In operation, the antenna 112 emits electromagnetic radio signals generated by the transceiver 114 to activate the tag 116. When the tag 116 is activated, data can be read from or written to the tag.

In some applications, the antenna 112 is a component of the transceiver and decoder 114 to become an interrogator (or reader) 118, which can be configured either as a hand held or a fixed-mount device. The interrogator 118 emits the radio signals 120 in range from one inch to one hundred feet or more, depending upon its power output and the radio frequency used. When an RF tag 116 passes through the electromagnetic radio signal waves 120, or the radio signal waves 120 reach the tag 116, the signal 120 is received by the tag 116, thereby activating the tag 116. Data encoded in the tag 116 is then reflected via by a data signal 122 through an antenna 124 to the interrogator 118 for subsequent processing.

An advantage of RFID systems is the non-contact, nonline-of-sight capability of the technology. Tags can be read through a variety of substances such as snow, fog, ice, paint, dirt, and other visually and environmentally challenging conditions where bar codes or other optically-read technologies would be useless. RF tags can also be read at remarkable speeds, in most cases responding in less than one hundred milliseconds.

There are three main categories of RFID tags. These are beam-powered passive tags, battery-powered semi-passive tags, and active tags. Each operate in fundamentally different ways.

The beam-powered RFID tag is often referred to as a passive device because it derives the energy needed for its operation from the radio frequency energy beamed at it. The tag rectifies the field and changes the reflective characteristics of the tag itself, creating a change in reflectivity that is seen at the interrogator. A battery-powered semi-passive RFID tag operates in a similar fashion, modulating its RF cross section in order to reflect a delta to the interrogator to develop a communication link. Here, the battery is the source of the tag's operational power. Finally, in the active RFID tag, a transmitter is used to create its own radio frequency energy powered by the battery.

A typical RF tag system 110 will contain at least one tag 116 and one interrogator 118. The range of communication for such tags varies according to the transmission power of the interrogator 118 and the tag 116. Battery-powered tags operating at 2,450 MHz have traditionally been limited to less than ten meters in range. However, devices with sufficient power can reach up to 200 meters in range, depending on the frequency and environmental characteristics.

Conventional RF tag systems utilize continuous wave backscatter to communicate data from the tag 116 to the interrogator 118. More specifically, the interrogator 118 transmits a continuous-wave radio signal to the tag 116, which modulates the signal 120 using modulated backscattering wherein the electrical characteristics of the antenna 120 are altered by a modulating signal from the tag that reflects a modulated signal 122 back to the interrogator 118. The modulated signal 122 is encoded with information from the tag 116. The interrogator 118 then demodulates the modulated signal 122 and decodes the information.

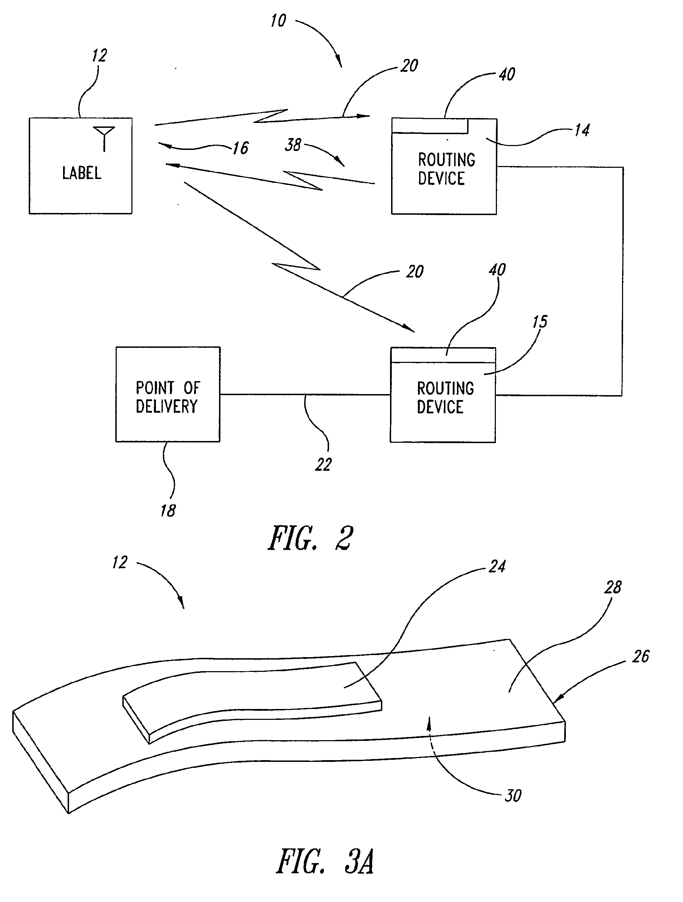

Figure 2 shows an example wherein a basic system 10 for identifying, routing or sorting or both, and tracking deliverables is provided. The system 10 includes an identifying and routing label 12, and at least one routing device 14 that responds to information stored in the label and either sorts or routes or sorts and routes for shipping and delivering an associated deliverable (not shown) from a point of origin 16 to a destination or delivery point 18. The routing machines 14, 15 have electromagnetic transceivers associated therewith that receive a control signal 20 from the label 12. The control signal 20 includes information about the destination of the deliverable and is used by the routing device 14 to sort the deliverable into the correct delivery path 22 to the point of delivery 18.

In accordance with an example as shown in Figures 3A-3B, the label 12 includes a flexible beam-powered, programmable transponder 24 preferably formed on or integrally with a flexible substrate 26. The flexibility of the substrate 26 and the associated transponder 24 facilitates use of the label on flexible articles, including paper, cloth, plastic, and thin metals. Conventional manufacturing methods and technology may be used in constructing the transponder 24 and the substrates 26. Ideally, the label 12 is formed of material that is disposable and as environmentally friendly as possible.

As shown in Figure 3A, the transponder 24 is formed in association with a first side 28 of the substrate while a second side 30 is adapted for application to a deliverable. For example, the second side 30 may have self-adhesive formed thereon that enables attachment of the label 12 to an article, a container for an article or articles, or on packaging.

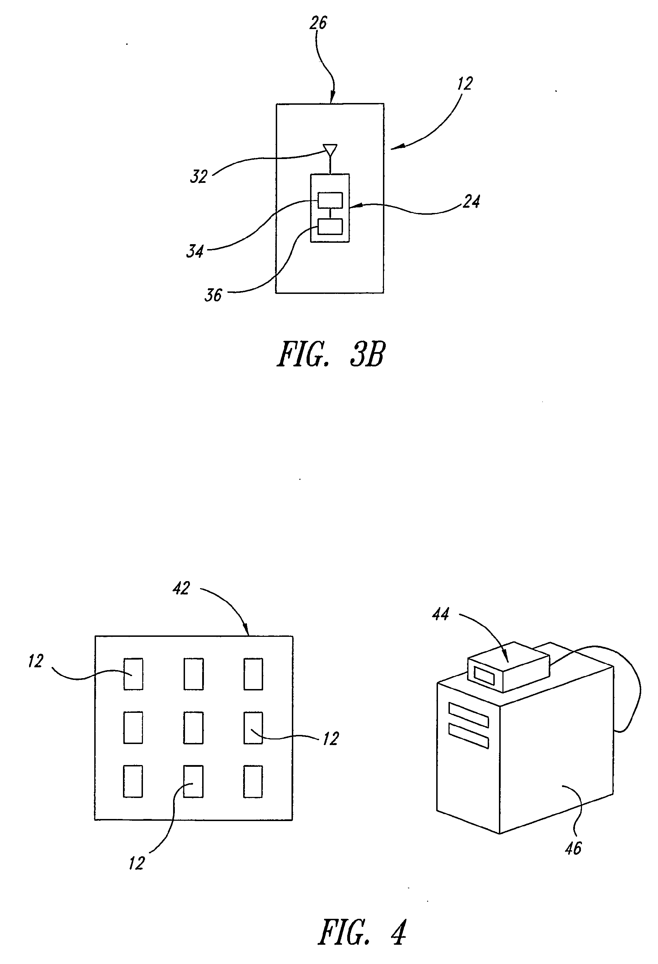

As shown in the schematic of Figure 3B, the label 12 has the transponder 24 formed thereon to include an antenna 32 coupled to a communication circuit 34 and a memory 36. Ideally, the transponder 24 is formed on a silicon die as an integrated circuit.

The transponder 24 is configured to receive a signal 38 from the electromagnetic transceivers 40, extract energy from the signal 38, and modulate the signal 38 for return back to the transceiver 40. The signal 38 is modulated based upon data stored in the memory 36 or by a predetermined circuit arrangement as known in the art. Preferably the memory 36 in the transponder 24 is programmed by an encoding signal.

Ideally, each label 12 is individually programmed at the time of application to a deliverable with information regarding destination, weight, contents, cost, point of origin, delivery route, shipper, receiver, or any one or combination of the foregoing.

One example of a system for encoding the labels 12 is shown in Figure 4. Here, the labels 12 are removably adhered to a backing sheet 42 formed of flexible material. Each label 12 can be programmed while attached to the backing sheet 42 or removed from the backing sheet 42 and programmed. Alternatively, two or more of the labels 12 can be simultaneously or consecutively programmed while still attached to the backing sheet 42. An encoder 44 is shown coupled to a processing unit 46, such as a personal computer. The encoder 44 is configured to transmit electromagnetic signals, such as radio-frequency signals, to one or more labels 12 when at a predetermined orientation with respect to the labels 12. For example, a label 12 can be inserted inside the encoder 44 at which time the data is encoded or programmed into the label 12. Data to be encoded onto the label 12 is entered into the processor 46 by conventional means, such as keyboard, mouse, voice, or connection to a local network, or to a worldwide network such as the Internet.

It is envisioned that the labels 12 can be purchased at a postal or shipping agency, at a kiosk, or at a retail location. The labels 12 may be encoded at the time of purchase or at the purchaser's facilities utilizing the encoder 44, such as a private business or subsequently at a residence. Thus, in one scenario, a private consumer can purchase the labels 12 at the post office or retail store, return to their residence and apply the labels 12 to packaging or envelopes after programming them using the address information already stored or to be entered in the processor 46.

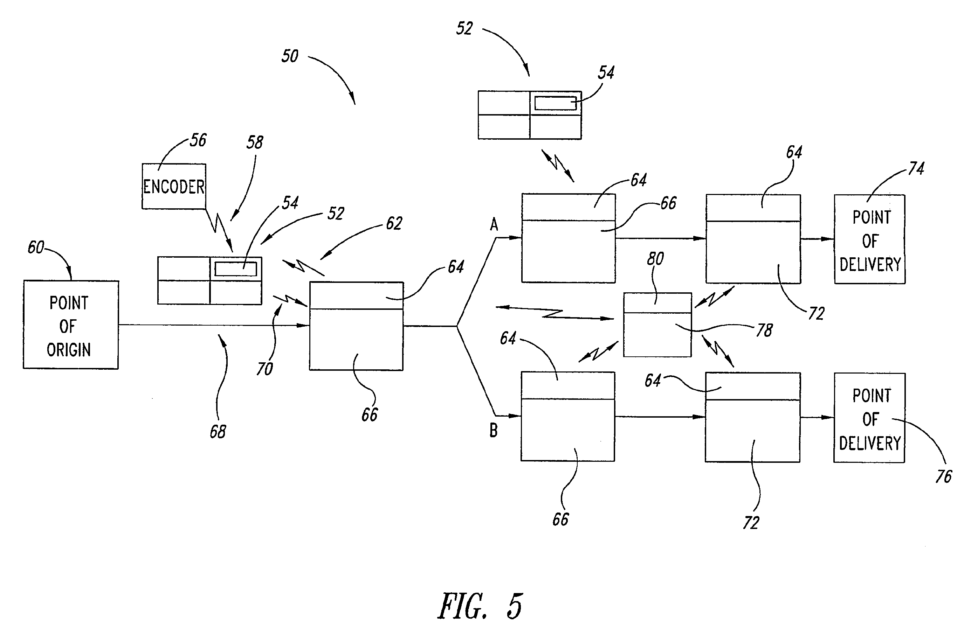

Shown in Figure 5 is an illustration of another system 50 for routing and tracking deliverables 52. In this example, the deliverable 52 is a package having a routing and tracking label 54 applied thereto that is essentially the same as the label 12 described above in connection with Figures 3A-3B. An encoder 56 is configured to program the label 54 via a radio-frequency signal 58. As previously described, encoding can take place at the point of purchase of the label 12 or at the point of origin 60.

Once the label 54 is encoded, either before or after being applied to the deliverable 52, it is configured to respond to signals 62 from a transceiver 64 associated with a routing device 66 in the delivery path 68.

It is to be understood that the label 54 can be applied to an article inside the deliverable 52, to a container holding the article, or to the exterior of the packaging in which the container or articles are shipped. Ideally, all of the communication devices 54, 56 and 64 are configured such that the data stored on the label 54 is retrievable and usable without reference to a linked database. As such, the signal 70 returned by the label 54 in response to the signal 62 from the transceiver 64 can function as a control signal. In a preferred embodiment, the return signal 70 is a backscattered signal reflected by a transponder associated with the label 54. As described above with respect to Figures 2 and 3A-3B, the label 54 has a transponder associated therewith that is of low cost, disposable material that is flexible and receives its energy from the signal 62 transmitted by the transceiver 64. In addition, the transponder one the label 54 is programmable to receive information described above with respect to the point of origin, point of destination, shipper, route of delivery, and the like, and to convey this information in the signal 70 to control operation of each of the routing devices 66.

In the system shown in Figure 5, the first routing device 66 shown immediately after the point of origin 60 selects delivery route A or B in accordance with the control signal 70, and an additional routing device 66 communicates with the label via the transceiver 64 for further routing. A delivery vehicle 72 has its own transceiver 64 for communication with the deliverable 52 and transports the deliverable 52 to the destination or the delivery point 74. The other point of delivery 76 shown at the end of delivery route B is for example only. A tracking center 78 that communicates with each of the routing devices 66 via its own transceiver 80 is used to track the location of the deliverable 52. It is to be understood that communication between the tracking center 78, the routing devices 66, and the delivery vehicle 72 can be by other means, such as the internet, cable, telephone, and the like.

Although a preferred embodiment of the invention has been illustrated and described, it is to be understood that various changes may be made therein without departing from the scope of the invention as defined by the claims. For example, although a passive transponder device has been illustrated and described, it is possible to use battery-powered or active transmitters, although such are not preferred because of size, weight, and cost considerations. Furthermore according to the invention each transceiver can be configured to communicate with a predetermined group of labels such that deliverables associated with the predetermined group of labels are sorted and routed to a predetermined path while remaining deliverables associated with other labels are sorted and routed to a second delivery path. For example, in Figure 5, the transceiver 64 can be configured to communicate with only a predetermined group of labels 54 such that deliverables associated with the predetermined group of labels 54 are routed to delivery path A and all other deliverables associated with all other labels are routed to a default path, delivery path B.

From the foregoing it will be appreciated that, although specific embodiments of the invention have been described herein for purposes of illustration, various modifications may be made without deviating from the scope of the invention. Accordingly, the invention is not limited except as by the appended claims.

## Claims

1. A system (50) for routing and tracking of deliverables (52), comprising:
a plurality of transponders, each transponder associated with a respective deliverable (52);
at least one transceiver (64) configured to send signals to transponders and to receive control signals therefrom regarding the associated deliverables;
a routing device (66) associated with the at least one transceiver to receive control and command signals via the transceiver and to sort and route the deliverables; and
an encoder (56) configured to transmit programming signals to at least one transponder; **characterized in that**
the at least one transceiver (64) is configured to communicate with only a predetermined group of said plurality of transponders, such that deliverables associated with the predetermined group of transponders are sorted and routed to a predetermined delivery path (A) and all other deliverables associated with all others of said plurality of transponders are routed to a default path (B).

2. The system of claim 1, wherein each at least one transceiver is integrally formed with the respective routing device.

3. The system of claim 1 or 2, further comprising a tracking device (78) for communicating with the transceivers to track the associated deliverable.

4. The system of any preceding claim, comprising:
a first additional transceiver (64) configured to send signals to transponders and to receive control signals therefrom regarding the associated deliverables;
a first additional routing device (66) associated with the first additional transceiver to receive control and command signals via the first additional transceiver and to sort and route deliverables;
a second additional transceiver (64) configured to send signals to transponders and to receive control signals therefrom regarding the associated deliverables;
a second additional routing device (66) associated with the second additional transceiver to receive control and command signals via the second additional transceiver and to sort and route deliverables;
wherein the routing device (66) associated with the at least one transceiver (64) is arranged to select between said predetermined delivery path (A) and said default path (B) immediately after a point of origin of each of said deliverables; and
the first additional routing device (66) is arranged to communicate with the deliverables associated with the predetermined group via the first additional transceiver for further routing from the predetermined path (A), and the second additional routing device (66) is arranged to communicate with said other deliverables via the second additional transceiver for further routing from the default path (B).

5. A method of routing and tracking deliverables, comprising:
providing a plurality of flexible, passive, programmable electromagnetic transponders, each transponder associated with a respective deliverable;
issuing signals from a transceiver (64) coupled to a routing device (66);
receiving at the transceiver control signals from transponders in response to the signals; and
controlling the routing device to route the deliverables to delivery paths;
**characterized in that** the transceiver communicates with only a predetermined group of said plurality of transponders, such that deliverables associated with the predetermined group of transponders are sorted and routed to a predetermined delivery path (A) and all other deliverables associated with all others of said plurality of transponders are routed to a default path (B).

6. The method of claim 5, further comprising an initial step of encoding the transponder with information for use in generating control signals.

7. The method of claim 5, further comprising purchasing at least one transponder and encoding the transponder with a purchase price.

8. The method of claim 5, further comprising communicating via a device (78) for tracking the location of deliverables with each transceiver to track the location of deliverables.

9. The method of any of claims 5 to 8, wherein:
said controlling comprises selecting between said predetermined delivery path (A) and said default path (B) immediately after a point of origin of each of said deliverables; and
the method further comprises: issuing signals from a first additional transceiver (64) coupled to a first additional routing device (66), receiving at the first additional transceiver control signals from the transponders of the predetermined group in response to the signals, and controlling the further routing device to further route the deliverables associated with the predetermined group from the predetermined delivery path (A); and
issuing signals from a second additional transceiver (64) coupled to a second additional routing device (66), receiving at the second additional transceiver control signals from said other transponders in response to the signals, and controlling the further routing device to further route said other deliverables from the default path (B).

## Patentansprüche

1. System (50) zum Befördern und Verfolgen von Lieferungen (52), wobei das System folgende Elemente aufweist:
eine Mehrzahl von Transpondern, wobei jeder Transponder mit einer entsprechenden Lieferung (52) assoziiert ist;
zumindest ein Transceiver (64), der konfiguriert ist, um Signale zu Transpondern zu senden und um von diesen Kontrollsignale, die die assoziierten Lieferungen betreffen, zu empfangen;
eine Beförderungseinrichtung (66), die mit dem zumindest einen Transceiver assoziiert ist, um Kontroll- und Befehlssignale über den Transceiver zu empfangen und um die Lieferungen zu sortieren und zu befördern; und
einen Encoder (56), der konfiguriert ist, um Programmierungssignale zu dem zumindest einen Transponder zu übertragen;
**dadurch gekennzeichnet, dass** der zumindest eine Transceiver (64) konfiguriert ist, um nur mit einer vorbestimmten Gruppe der Mehrzahl von Transpondern zu kommunizieren, so dass Lieferungen, die mit der vorbestimmten Gruppe von Transpondern assoziiert sind, sortiert werden und zu einem vorbestimmten Lieferpfad (A) befördert werden und alle anderen Lieferungen, die mit allen anderen der Mehrzahl von Transpondern assoziiert sind, zu einem Standardpfad (B) befördert werden.

2. System nach Anspruch 1, wobei jeder zumindest eine Transceiver integral mit der entsprechenden Beförderungseinrichtung ausgestaltet ist.

3. System nach Anspruch 1 oder 2, wobei das System des Weiteren eine Verfolgungseinrichtung (78) zum Kommunizieren mit den Transceivern, um die assoziierte Lieferung zu verfolgen, aufweist.

4. System nach einem der vorangegangenen Ansprüche, wobei das System die folgenden Elemente aufweist:
einen ersten zusätzlichen Transceiver (64), der konfiguriert ist, um Signale zu Transpondern zu senden und um von diesem Kontrollsignale, die sich auf die assoziierten Lieferungen beziehen, zu empfangen;
eine erste zusätzliche Beförderungseinrichtung (66), die mit dem ersten zusätzlichen Transceiver assoziiert ist, um Kontroll- und Befehlssignale über den ersten zusätzlichen Transceiver zu empfangen und um die Lieferungen zu sortieren und zu befördern;
einen zweiten zusätzlichen Transceiver (64), der konfiguriert ist, um Signale zu Transpondern zu senden und um von diesen Kontrollsignale, die sich auf die assoziierten Lieferungen beziehen, zu empfangen;
eine zweite zusätzliche Beförderungseinrichtung (66), die mit dem zweiten zusätzlichen Transceiver assoziiert ist, um Kontroll- und Befehlssignale über den zweiten zusätzlichen Transceiver zu empfangen und um Lieferungen zu sortieren und zu befördern;
wobei die Beförderungseinrichtung (66), die mit dem zumindest einen Transceiver (64) assoziiert ist, ausgestaltet ist, um zwischen dem vorbestimmten Lieferpfad (A) und dem Standardpfad (B) direkt nach einem Herkunftsort jeder der Lieferungen auszuwählen; und
die erste zusätzliche Beförderungseinrichtung (66) ausgestaltet ist, um mit den Lieferungen, die mit der vorbestimmten Gruppe assoziiert sind, über den ersten zusätzlichen Transceiver zu kommunizieren, zum weiteren Befördern von dem vorbestimmten Pfand (A), und wobei die zweite zusätzliche Beförderungseinrichtung (66) ausgestaltet ist, um mit den anderen Lieferungen über den zweiten zusätzlichen Transceiver zu kommunizieren, zur weiteren Beförderung von dem Standardpfad (B).

5. Verfahren zum Befördern und Verfolgen von Lieferungen, wobei das Verfahren die folgenden Schritte aufweist:
Bereitstellen einer Mehrzahl von flexiblen, passiven, programmierbaren elektromagnetischen Transpondern, wobei jeder Transponder mit einer entsprechenden Lieferung assoziiert ist;
Emittieren von Signalen von einem Transceiver (64), der mit einer Beförderungseinrichtung (66) verbunden ist;
Empfangen von Kontrollsignalen von Transpondern als Antwort auf die Signale an dem Receiver; und
Kontrollieren der Beförderungseinrichtung, um die Lieferungen zu Lieferpfaden zu befördern;
**dadurch gekennzeichnet, dass** der Transceiver mit nur einer vorbestimmten Gruppe der Mehrzahl von Transpondern kommuniziert, so dass Lieferungen, die mit der vorbestimmten Gruppe von Transpondern assoziiert sind, sortiert werden und zu einem vorbestimmten Lieferpfad (A) befördert werden und alle anderen Lieferungen, die mit allen anderen der Mehrzahl von Transpondern assoziiert sind, zu einem Standardpfad (B) befördert werden,

6. Verfahren nach Anspruch 5, wobei das Verfahren des Weiteren einen anfänglichen Schritt des Encodierens des Transponders mit Informationen zur Verwendung bei der Erzeugung der Kontrollsignale aufweist.

7. Verfahren nach Anspruch 5, wobei das Verfahren des Weiteren ein Kaufen zumindest eines Transponders und ein Encodieren des Transponders mit dem Kaufpreis aufweist.

8. Verfahren nach Anspruch 5, wobei das Verfahren des Weiteren ein Kommunizieren über eine Einrichtung (78) zum Verfolgen des Orts von Lieferungen mit jedem Transceiver aufweist, um den Ort der Lieferungen zu verfolgen.

9. Verfahren nach einem der Ansprüche 5 bis 8, wobei:
das Kontrollieren ein Auswählen zwischen dem vorbestimmten Lieferpfad (A) und dem Standardpfad (B) direkt nach einem Herkunftsort jeder der Lieferungen aufweist; und
wobei das Verfahren des Weiteren die folgenden Schritte aufweist:
Emittieren von Signalen von einem ersten zusätzlichen Transceiver (64), der mit einer ersten zusätzlichen Beförderungseinrichtung (66) verbunden ist, Empfangen von Kontrollsignalen von den Transpondern der vorbestimmten Gruppe als Antwort auf die Signale an dem ersten zusätzlichen Transceiver, und Kontrollieren der weiteren Beförderungseinrichtung, um die Lieferungen, die mit der vorbestimmten Gruppe assoziiert sind, von dem vorbestimmten Lieferpfad (A) weiter zu befördern; und
Emittieren von Signalen von einem zweiten zusätzlichen Transceiver (64), der mit einer zweiten zusätzlichen Beförderungseinrichtung (66) verbunden ist, Empfangen von Kontrollsignalen von den anderen Transpondern als Antwort auf die Signale an dem zweiten zusätzlichen Transceiver, und Kontrollieren der weiteren Beförderungselnrichtung, um die anderen Lieferungen von dem Standardpfad (B) weiterzuleiten.

## Revendications

1. Système (50) d'acheminement et de suivi de produits (52), comprenant :
une pluralité de transpondeurs, chaque transpondeur étant associé à un produit respectif (52) ;
au moins un transducteur (64) configuré pour envoyer des signaux aux transpondeurs et pour recevoir des signaux de contrôle des transpondeurs concernant les produits associés ;
un dispositif d'acheminement (66) associé au transducteur pour recevoir des signaux de contrôle et de commande via le transducteur et pour trier et acheminer les produits ; et
un encodeur (56) configuré pour transmettre des signaux de programmation au transducteur ;
**caractérisé en ce que**
le transducteur (64) est configuré pour communiquer avec seulement un groupe prédéterminé de transpondeurs de la pluralité de transpondeurs, de telle sorte que les produits associés au groupe prédéterminé de transpondeurs sont triés et acheminés vers une piste de livraison prédéterminée (A) et tous les autres produits associés aux autres transpondeurs de la pluralité de transpondeurs sont acheminés sur une piste par défaut (B).

2. Système selon la revendication 1, dans lequel au moins un transducteur est intégralement formé avec le dispositif d'acheminement respectif.

3. Système selon la revendication 1 ou 2, comprenant en outre un dispositif de suivi (78) pour communiquer avec les transducteurs pour suivre le produit associé.

4. Système selon l'une quelconque des revendications précédentes, comprenant :
un premier transducteur supplémentaire (64) configuré pour envoyer des signaux aux transpondeurs et pour recevoir des signaux de contrôle des transpondeurs concernant les produits associés ;
un premier dispositif d'acheminement supplémentaire (66) associé au premier transducteur supplémentaire pour recevoir des signaux de contrôle et de commande via le premier transducteur supplémentaire et pour trier et acheminer les produits ;
un second transducteur supplémentaire (64) configuré pour envoyer des signaux aux transpondeurs et pour recevoir des signaux de contrôle des transpondeurs concernant les produits associés ;
un second dispositif d'acheminement supplémentaire (66) associé au second transducteur supplémentaire pour recevoir des signaux de contrôle et de commande via le second transducteur supplémentaire et pour trier et acheminer des produits ;
dans lequel le dispositif d'acheminement (66) associé au transducteur (64) est agencé pour choisir entre la piste de livraison prédéterminée (A) et la piste par défaut (B) immédiatement après un point d'origine de chacun des produits ; et
le premier dispositif d'acheminement supplémentaire (66) est agencé pour communiquer avec les produits associés au groupe prédéterminé via le premier transducteur supplémentaire pour un acheminement supplémentaire à partir de la piste prédéterminée (A), et le second dispositif d'acheminement supplémentaire (66) est agencé pour communiquer avec les autres produits via le second transducteur supplémentaire pour un acheminement supplémentaire à partir de la piste par défaut (B).

5. Procédé d'acheminement et de suivi de produits, comprenant les étapes consistant à :
prévoir une pluralité de transpondeurs électromagnétiques flexibles, passifs et programmables, chaque transpondeur étant associé à un produit respectif ;
émettre des signaux à partir d'un transducteur (64) couplé à un dispositif d'acheminement (66) ;
recevoir par le transducteur des signaux de contrôle issus de transpondeurs en réponse aux signaux ; et
contrôler le dispositif d'acheminement pour acheminer les produits vers des pistes de livraison ;
**caractérisé en ce que** le transducteur communique avec seulement un groupe prédéterminé de la pluralité de transpondeurs, de telle sorte que les produits associés au groupe prédéterminé de transpondeurs sont triés et acheminés vers une piste de livraison prédéterminée (A) et tous les autres produits associés à tous les autres transpondeurs de la pluralité de transpondeurs sont acheminés vers une piste par défaut (B).

6. Procédé selon la revendication 5, comprenant en outre une étape initiale consistant à encoder le transpondeur avec des informations à utiliser lors de la génération de signaux de contrôle.

7. Procédé selon la revendication 5, comprenant en outre une étape consistant à acheter au moins un transpondeur et à encoder le transpondeur avec un prix d'achat.

8. Procédé selon la revendication 5, comprenant en outre une étape consistant à communiquer via un dispositif (78) pour suivre l'emplacement des produits, chaque transducteur suivant l'emplacement des produits.

9. Procédé selon l'une quelconque des revendications 5 à 8, dans lequel :
le contrôle comprend l'étape consistant à choisir entre la piste de livraison prédéterminée (A) et la piste par défaut (B) immédiatement après un point d'origine de chacun des produits ; et
le procédé comprenant en outre les étapes consistant à : émettre des signaux à partir d'un premier transducteur supplémentaire (64) couplé à un premier dispositif d'acheminement supplémentaire (66), recevoir par le premier transducteur supplémentaire des signaux de contrôle issus des transpondeurs du groupe prédéterminé en réponse aux signaux, et contrôler le dispositif d'acheminement supplémentaire pour un acheminement supplémentaire des produits associés au groupe prédéterminé à partir de la piste de livraison prédéterminée (A) ; et
émettre des signaux à partir d'un second transducteur supplémentaire (64) couplé à un second dispositif d'acheminement supplémentaire (66), recevoir par le second transducteur supplémentaire des signaux de contrôle issus des autres transpondeurs en réponse aux signaux, et contrôler le dispositif d'acheminement supplémentaire pour un acheminement supplémentaire des autres produits à partir de la piste par défaut (B).
